# EUROPEAN PATENT SPECIFICATION

(11) **EP 3 541 609 B1**
(45) Date of publication and mention of the grant of the patent: **15.06.2022**
(21) Application number: 17870726.1
(22) Date of filing: 16.11.2017
(51) Int. Cl.: B29D 30/06, B29C 73/22, B60C 1/00, B60C 5/14, B60C 19/12, B29C 73/16

(54) **PNEUMATIC TIRE HAVING A SEALANT LAYER AND AIR BARRIER LAYER**
LUFTREIFEN MIT EINER DICHTUNGSSCHICHT UND LUFTBARRIERESCHICHT
PNEUMATIQUE À COUCHE D'AGENT D'ÉTANCHÉITÉ ET À NAPPE BARRIÈRE À L'AIR

(30) Priority: 17.11.2016 US 201662423387 P
(43) Date of publication of application: 25.09.2019
(73) Proprietor: Bridgestone Americas Tire Operations, LLC, Nashville, TN 37201 (US)
(72) Inventor: RANDALL, Amy M., Brentwood, TN 37027 (US); BALNIS, Craig R., Aberdeen, NC 28315 (US); ZEMLA, David J., Canal Fulton, Ohio 44614 (US)
(74) Representative: Kraus & Weisert Patentanwälte PartGmbB
(86) International application number: PCT/US2017/061889
(87) International publication number: WO 2018/093962

(56) References cited:
- EP-A1- 2 335 913
- WO-A1-03/028986
- US-A- 4 895 610
- US-A1- 2009 084 482
- US-A1- 2009 211 683
- US-A1- 2009 272 476
- US-A1- 2011 146 860
- US-A1- 2015 306 914

## Description

### FIELD OF THE INVENTION

Embodiments of the present invention generally relate to the field of pneumatic tires and, more particularly, to a method of preparing pneumatic tires having a sealant layer and an air barrier layer.

### BACKGROUND OF THE INVENTION

The inner surface of a pneumatic tire typically includes an elastomeric layer designed to prevent or retard air permeation from the inner air chamber. This inner elastomeric layer, which is often referred to as an innerliner, typically includes butyl rubber or halobutyl rubber, which are relatively impermeable to air. The innerliner is often formulated with compounding additives and a curing system, and then fabricated into a thin sheet that is then laminated to the inner surface of a tire carcass of an uncured tire as the tire is formed. Final cure of the composite structure produces a tire having a cured innerliner co-cured with the carcass.

In addition to or in lieu of an innerliner, it is known to include an air permeation resistant film, which may be referred to as an air-resistant film or air barrier, in order to prevent air permeation from the inner air chamber. For example, U.S. Pat. No 5,738,158 teaches a pneumatic tire having an air permeation prevention layer composed of a thin resin film including a thermoplastic polyester elastomer. The air permeation prevention layer can be adhered to the rubber tire by using various adhesive systems including isocyanate-based adhesives in conjunction with heat and pressure at the time of vulcanization and molding.

Pneumatic tires have also been modified by including a sealant layer within the tire construction. These sealant layers provide a composition that can flow when the tire carcass or innerliner is punctured and thereby provide a mechanism for sealing the puncture. For example, U.S. Pat. No. 6,962,181 teaches pneumatic tires having a built-in puncture sealing layer that contains a partially depolymerized butyl rubber sealant layer positioned between a sulfur vulcanized halobutyl rubber tire innerliner and a sulfur vulcanized diene-based vulcanized carcass.

U.S. Pat. Publ. No. 2008/0078489 teaches pneumatic tires including a sealant layer formed by heating a rubber composition including polyisobutylene and peroxide. The sealant layer may be positioned on the inner side of the innerliner and covered with a rubber layer or a thermoplastic film layer. The rubber composition is applied to an uncured tire and is subsequently subjected to curing conditions. Similarly, an air permeation resistant film and the sealant layer have also been proposed in U.S. Patent No. 8,534,331, which discloses a tire containing a layered composite of sealant and air permeation resistant film. The inner sealant includes an organoperoxide depolymerized butyl rubber or polyurethane, and it is built into an uncured rubber tire and subsequently cured with the rubber tire.

US 4,895,610 A discloses a method of preparing a tire with self-sealing properties, in which a cured tire is provided and a sealant composition is applied to at least a portion of a carcass layer of the tire, the sealant composition being disposed inwardly from the carcass layer and outwardly from an innerliner layer acting as an air barrier layer.

### SUMMARY OF THE INVENTION

According to the invention, a method of preparing a tire with self-sealing properties as defined in claim 1 is provided. The dependent claims define preferred and/or advantageous embodiments of the invention.

### BRIEF DESCRIPTION OF THE DRAWINGS

Fig. 1 is a cross-sectional view of a tire prepared according to one or more embodiments of the invention.
Fig. 2 is a cross-sectional view of a tire prepared according to one or more embodiments of the invention.
Fig. 3 is a cross-sectional view of a tire prepared according to one or more embodiments of the invention.
Fig. 4 is a cross-sectional view of a tire prepared according to one or more embodiments of the invention.

### DETAILED DESCRIPTION OF ILLUSTRATIVE EMBODIMENTS

Embodiments of the present invention are based, at least in part, on pneumatic tires that include a sealant layer and an air barrier layer. Both the sealant layer and the air barrier layer are applied after the tire is cured. Embodiments of the invention include a method of preparing a pneumatic tire including the steps of providing a cured pneumatic tire, applying a sealant composition to the cured tire, and applying an air barrier composition to the cured tire. While the prior art contemplates adding an air permeation resistant film and a sealant layer to an uncured rubber tire and subsequently curing the rubber tire, the present invention employs sealant compositions and air barrier compositions that are suitable for addition to a cured rubber tire. Thus, the time to cure a rubber tire may be reduced. In one or more embodiments, a cured rubber tire to which an air barrier layer and a sealant layer are added may be devoid of an innerliner including butyl rubber or halobutyl rubber. In these embodiments, and in embodiments where a sealant layer is disposed directly on a carcass of the cured rubber tire, and an air barrier layer is disposed on the sealant layer, the sealant layer may be adapted to adhere the air barrier layer with the carcass. Moreover, in embodiments where a cured rubber tire is devoid of an innerliner, the lack of an innerliner may advantageously offset the weight added to the tire by the air barrier and the sealant layer.

### TIRE STRUCTURE

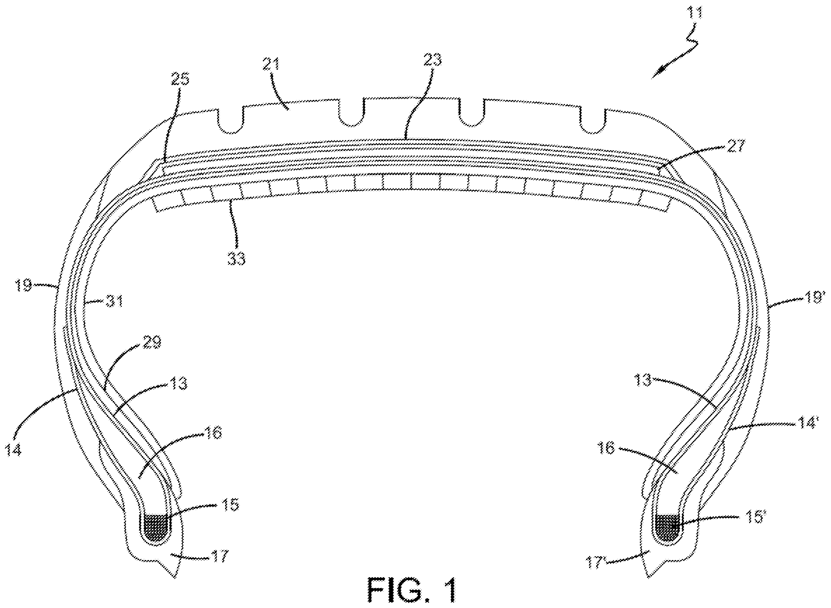

Aspects of the invention can be described with reference to Figs. 1-4. As specifically shown in Fig. 1, tire 11 includes carcass 13 extending between a pair of axially-spaced beads 15, 15'. Carcass 13 includes opposed turn-up portions 14, 14', which thereby cause body ply 13 to surround bead filler portions 16, 16', respectively. Abrasion strips 17, 17' partially encase body ply 13 at or near beads 15, 15'. Tire 11 further includes opposing sidewalls 19, 19', and tread portion 21, which forms the outermost circumferential surface of tire 11. Subtread 23 is disposed below tread 21, undertread 25 is disposed below subtread 23, and belt package 27 is disposed below undertread 25. Belt package 27, which may include a plurality of belts (not shown) is positioned above carcass 13, which itself may include one or more body plies (not shown). Innerliner 29 is disposed on the interior of carcass 13 relative to tread 21. As the skilled person will appreciate, tire 11 may also include various other components, which are not shown, such as, but not limited to, tread shoulders, cap plies, belt wedges, and belt shoulders.

According to embodiments of the present invention, tire 11 further includes air barrier layer 31 and sealant layer 33. As shown in Fig. 1, air barrier layer 31 is disposed on the interior of innerliner 29 relative to tread 21 and generally extends from a location proximate to first abrasion strip 17 to a location proximate second abrasion strip 17'. Sealant layer 33 is disposed below air barrier 31 (i.e., interior to air barrier layer 31) relative to tread 21 and generally extends along a length commensurate with the length of tread 21.

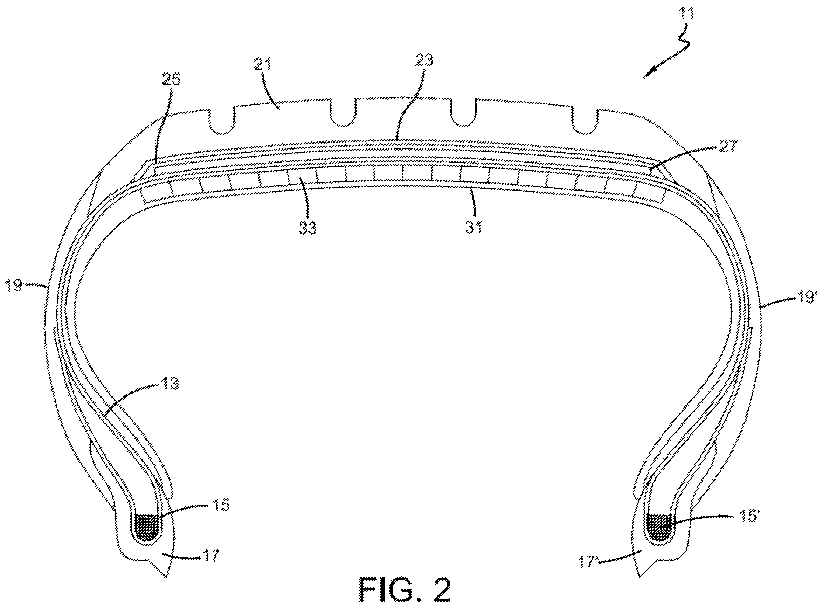

As shown in Fig. 2, the position of sealant 33 relative to air barrier 31 can be reversed. Namely, sealant layer 33 can be disposed on innerliner 29, and air barrier layer 31 can be disposed below (i.e., interior to) sealant layer 33. In one or more embodiments, as shown in Fig. 2, air barrier layer 31 encases sealant layer 33.

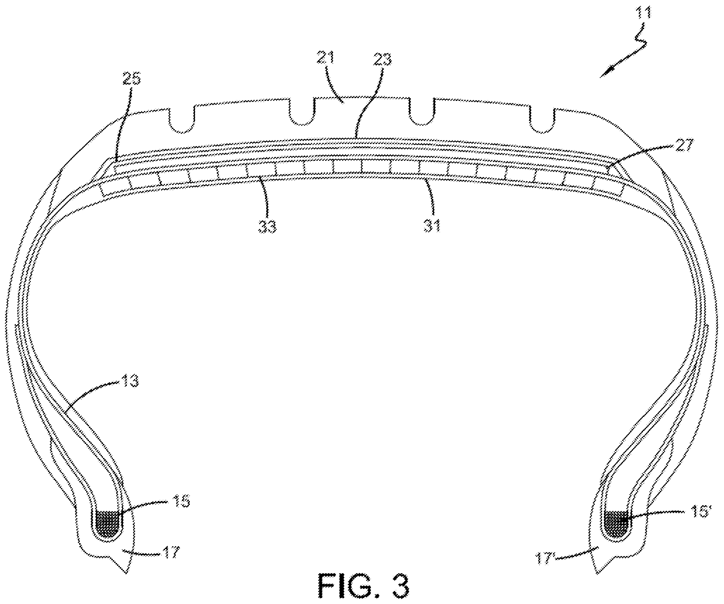

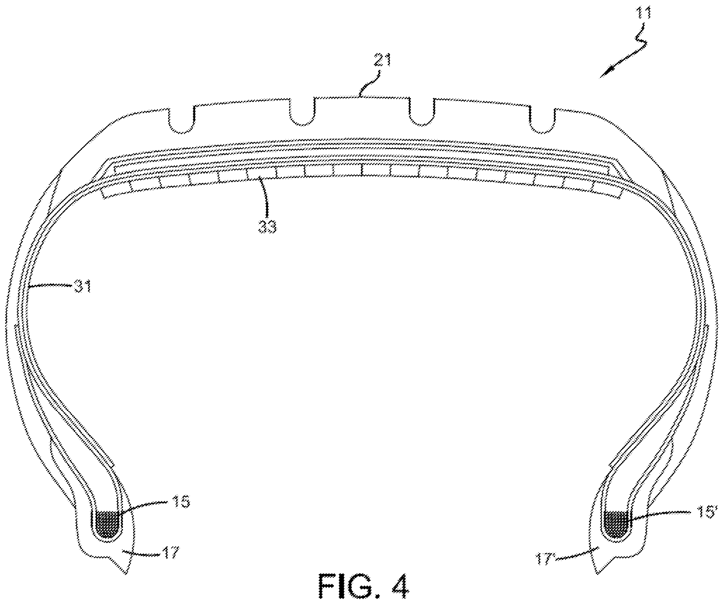

In alternate embodiments, which are shown in Figs. 3 and 4, tire 11 is without a separate innerliner portion and therefore, as specifically shown in Fig. 3, sealant layer 33 is disposed directly on carcass 13 in an area commensurate with tread 21. Air barrier layer 31 is disposed over sealant layer 33, and in those areas where sealant layer 33 is not present, air barrier layer 31 is disposed directly on carcass 13, as shown in Fig. 3. Thus, air barrier layer 31 generally extends from first abrasion strip 17 to second abrasion strip 17' (i.e., generally throughout the entire inner surface of carcass 13).

In yet other embodiments, as shown in Fig. 4, air barrier layer is disposed directly on carcass 13 and generally extends from first abrasion strip 17 to second abrasion strip 17' (i.e., generally throughout the entire inner surface of carcass 13). Sealant layer 33 is disposed on a portion of air barrier layer 31 in an area generally commensurate with tread 21.

Although not shown in the drawings, the tires of the present invention may include a layer of an anti-tack composition applied to at least one of the innermost layers of the tire. In particular embodiments, the anti-tack composition, which may be referred to as an anti-tack coating, may be applied to cover an exposed sealant layer, as shown in Figs. 1 and 4. In particular embodiments, the anti-tack composition may include a composition including a polymeric resin selected from acrylic resins and/or vinyl acetate copolymers as disclosed in U.S. Publication No. 2003/0230369, which is incorporated herein by reference.

In yet other embodiments, a tires of the present invention may include sidewall inserts (not shown in the Figs.) of the type generally known in the art for producing a self-supporting run flat tire. In this respect, U.S. Patent Nos. 6,488,797; 6,834,696; and 5,769,980 are each incorporated herein by reference. In one or more embodiments, the sealant layer can be disposed on the sidewall inserts. In one or more embodiments, the air barrier layer can be disposed on the sidewall inserts.

### SEALANT LAYER

The sealant layer of one or more embodiments of the invention (e.g., sealant layer 33) generally includes those rubber compositions that are flowable and can therefore seal a puncture that may be subjected to tire 11 in the region where the sealant layer is disposed. The compositions therefore provide the tires of the invention with self-healing properties.

Practice of one or more embodiments of the invention is not necessarily limited by the selection of any particular sealant composition for the sealant layer. Various sealant compositions are known for this particular purpose, as generally disclosed in U.S. Patent Nos. 8,534,331; 6,303,694; 4,607,065; 4,548,687; 4,090,546; 6,962,181; 6,840,295; 6,837,287; 6,508,898; 6,159,613; 6,148,885; 6,011,093; 4,966,213; 4,895,610; 4,228,839; 4,171,237; 4,140,167; 3,048,509; 2,877,819; and 1,239,291; U.S. Publication Nos. 2008/0078489, 2009/0078352, 2011/0056604, 2010/0294411, 2010/0175804 and 2010/0263778; and PCT Patent Application No. WO2011/012699, all of which are incorporated herein by reference.

In one or more embodiments, the sealant layer includes a composition deriving from a butyl rubber emulsion that includes at least one additional rubber component selected from the group consisting of diene type unsaturated hydrocarbon polymer emulsions and a natural rubber latex, at least one saturated hydrocarbon polymer emulsion, a crosslinking agent for the rubbers and a crosslinking activator. In particular embodiments, the sealant layer is self-curing due to the presence of peroxide and/or quinoid curing agents that are impregnated on solid fillers in conjunction with select polar solvent accelerators. The quinoid vulcanizing accelerator may mixed with a rubber masterbatch prior to sequential or concurrent addition of the peroxide curing agent and the select polar solvent accelerator. Alternatively, the peroxide curing agent, quinoid vulcanizing agent and the select polar solvent can be added in any order or conjointly.

In yet other embodiments, the sealant layer can include a uniform dispersion of small quinoid particles without the use of polar, organic solvents to solubilize the curing agent. These sealant compositions may be prepared by mixing an elastomer in the substantial absence of an organic solvent and separately dispersing a quinoid curing agent in a polymer to form a curing agent concentrate. The curing agent concentrate may then be combined with the elastomer to form the sealant composition.

In still other embodiments, the sealant layer includes an at least partially-decomposed polyisobutylene. These compositions may be prepared by heating treating polyisobutylene in the presence of peroxide. These compositions may further include a liquid rubber such as liquid ethylene/alpha-olefin copolymer [e.g., liquid ethylene-propylene-diene rubber (EPDM)], liquid polybutadiene, or liquid polyisoprene. Alternatively, the sealant layer may include an at least partially-decomposed butyl rubber, which may likewise be produced by heating treating butyl rubber in the presence of a peroxide.

In one or more embodiments, the sealant layer includes ethylene-propylene-diene rubber. In specific embodiments, the ethylene-propylene-diene rubber may be included within a blend with butyl rubber and/or polyisobutylene. In one or more embodiments, these ethylene-propylene-diene rubber compositions may be cured (e.g., sulfur cured). Compositions of this nature are disclosed, for example, in U.S. Patent Nos. 4,657,958; 5,563,217; 5,612,141; 5,545,685; 5,859,114 and 5,985,981, which are incorporated herein by reference.

In yet other embodiments, the sealant layer includes a polyurethane composition including those that may be formed from a cast or a millable polyurethane or a sulfur-curable diene-containing polyurethane precursor. In particular embodiments, the sealant layer includes a self-healing polyurethane, which may include the reaction product of methylene diphenyl 4,4-diisocyanate and poly(alkyleneoxide)glycol.

In one or more embodiments, the sealant layer (e.g., sealant layer 33) may have a thickness of greater than 1 mm, in other embodiments greater than 2 mm, in other embodiments greater than 3 mm, and in other embodiments greater than 4 mm. In these or other embodiments, the sealant layer may have a thickness of less than 8 mm, in other embodiments less than 7 mm, in other embodiments less than 6 mm, and in other embodiments less than 5 mm. In one or more embodiments, the sealant layer may have a thickness of from about 1 mm to about 8 mm, in other embodiments from about 2 mm to about 7 mm, and in other embodiments from about 3 mm to about 6 mm.

In one or more embodiments, the composition of the sealant layer is not sulfur crosslinked to an adjacent tire component. For example, in one or more embodiments, the composition of the sealant layer is not sulfur crosslinked to the innerliner. In other embodiments, the sealant layer is not sulfur crosslinked to the carcass.

### AIR BARRIER LAYER

In one or more embodiments, the air barrier layer (e.g. air barrier layer 31) may be generally described with respect to one or more properties of the air barrier layer.

The air barrier layer of one or more embodiments of the present invention (e.g. air barrier layer 31) generally includes a polymeric layer that has low permeability to air; i.e. low permeability to oxygen, nitrogen and carbon dioxide. The low permeability to air may be described in terms of the oxygen permeability (P(O₂)), which may also be referred to as oxygen permeance. The P(O₂) number quantifies the amount of oxygen that can pass through the polymeric layer under a specific set of circumstances and is generally expressed in units of cc·mm/m²·day·atm. This is a standard unit of permeation measured as cubic centimeters of oxygen permeating through one millimeter thickness of a sample, of an area of a square meter, over a 24 hour period, under a partial pressure differential of one atmosphere at a specific temperature and relative humidity (R.H.) conditions. In one or more embodiments, the oxygen permeability (P(O₂)) may be measured in accordance with ASTM method F1927-14 which measures O₂ transmission rates at 23 °C at 50% relative humidity.

In one or more embodiments, the air barrier layer of the tires of the present invention (e.g. air barrier layer 31) may have a P(O₂) of less than 500, in other embodiments less than 250, in other embodiments less than 150, in other embodiments less than 100, in other embodiments less than 80, and in other embodiments less than 50, cc·mm/m²·day·atm. In one or more embodiments, the air barrier layer may have a P(O₂) of from about 0.01 to about 500 cc·mm/m²·day·atm, in other embodiments from about 0.1 to about 100 cc·mm/m²·day·atm, in other embodiments from about 50 to about 100 cc·mm/m²·day·atm, and in other embodiments from about 50 to about 80 cc·mm/m²·day·atm.

In one or more embodiments, the air barrier layer of the tires of the present invention (e.g. air barrier layer 31) may have advantageous adhesion to another component of the tire. The adhesion may be measured by ASTM D903 or ASTM D1876.

In one or more embodiments, the air barrier layer of the tires of the present invention (e.g. air barrier layer 31) may have an adhesion to the carcass (e.g. carcass 13) of more than 5 N/mm, in other embodiments more than 10 N/mm, in other embodiments more than 15 N/mm, in other embodiments more than 30 N/mm, and in other embodiments more than 50 N/mm. In one or more embodiments, the air barrier layer may have an adhesion to the carcass of from about 1 N/mm to about 50 N/mm, in other embodiments from about 5 N/mm to about 30 N/mm, and in other embodiments from about 5 N/mm to about 15 N/mm.

In one or more embodiments, the air barrier layer of the tires of the present invention (e.g. air barrier layer 31) may have an adhesion to the innerliner (e.g. innerliner 29) of more than 5 N/mm, in other embodiments more than 10 N/mm, in other embodiments more than 15 N/mm, in other embodiments more than 30 N/mm, and in other embodiments more than 50 N/mm. In one or more embodiments, the air barrier layer may have an adhesion to the innerliner of from about 1 N/mm to about 50 N/mm, in other embodiments from about 5 N/mm to about 30 N/mm, and in other embodiments from about 5 N/mm to about 15 N/mm.

In one or more embodiments, the air barrier layer of the tires of the present invention (e.g. air barrier layer 31) may have an adhesion to the sealant layer (e.g. sealant layer 33) of more than 3 N/mm, in other embodiments more than 5 N/mm, in other embodiments more than 10 N/mm, in other embodiments more than 15 N/mm, in other embodiments more than 20 N/mm, and in other embodiments more than 30 N/mm. In one or more embodiments, the air barrier layer may have an adhesion to the carcass of from about 1 N/mm to about 30 N/mm, in other embodiments from about 3 N/mm to about 20 N/mm, and in other embodiments from about 5 N/mm to about 10 N/mm.

The air barrier layer of one or more embodiments of the present invention (e.g. air barrier layer 31) may be generally characterized with respect to the composition of the air barrier layer.

Practice of one or more embodiments of the invention is not necessarily limited by the selection of any particular air barrier composition for the air barrier layer. Various air barrier compositions are known for this particular purpose, as generally disclosed in U.S. Pat. Nos. 5,840,825; 6,309,757; 6,521,706; 7,730,919; 7,798,188; 7,905,978; 7,954,528; 7,976,666; 8,021,730; 8,534,331; and 8,835,592; and U.S. Publication Nos. 2008/0047646; 2009/0038727; 2008/0152935; 2010/0174032; and 2015/0368512, which are incorporated herein by reference.

In one or more embodiments, an air barrier composition may include two or more polymeric components, each having a distinct glass transition temperature (T_{g}). In one or more embodiments, the two or more polymeric components may be sufficiently blended to provide the blended composition with a glass transition temperature that is distinct from the glass transition temperatures of the two or more polymeric components. In one or more embodiments, the air barrier layer composition of one or more embodiments of the present invention includes at least one glass transition temperature (T_{g}) peak, from one component of the air barrier layer, of less than -20 °C, in other embodiments, less than - 30 °C, and in other embodiments, less than -40 °C. Glass transition temperature may be measured by differential scanning calorimetry. In these or other embodiments, the air barrier layer composition includes a second glass transition temperature (T_{g}) peak of greater than 0 °C, in other embodiments, greater than 10 °C, and in other embodiments greater than 20 °C.

In one or more embodiments, an air barrier composition is a polymeric composition including a thermoplastic and elastomeric component. In one or more embodiments, the air barrier layer is phase-separated polymeric system wherein an elastomeric component is phase separated from a thermoplastic component (e.g. soft and hard domains). In certain embodiments, the thermoplastic component is dispersed within the elastomeric component. In other embodiments, the elastomeric component is dispersed within the thermoplastic component. In yet other embodiments, the thermoplastic component and the elastomeric component are co-continuous. An exemplary embodiment includes a first phase with a polyurethane and a second phase with a polysulfide elastomer, and in certain embodiments, the polyurethane provides the continuous phase while polysulfide forms the discontinuous phase.

In one or more embodiments, an air barrier layer may be formed from an air barrier coating composition that is an aqueous dispersion or latex. In one or more embodiments, this aqueous dispersion may include more than 10 wt. % solids, in other embodiments more than 20 wt. % solids, in other embodiments more than 25 wt. % solids, in other embodiments more than 40 wt. % solids, and in other embodiments more than 45, wt. % solids. In one or more embodiments, an aqueous medium having a dispersion of one or more polymeric materials therein may include from about 10 to about 45 wt. % solids, in other embodiments from about 20 to about 40 wt. % solids, and in other embodiments from about 20 to about 25 wt. % solids.

In particular embodiments, the air barrier layer includes a blend of polyurethane and elastomeric polymer. As disclosed in U.S. Publ. No. 2010/0174032, which is incorporated herein by reference, the polyurethane may include a polyurethane wherein at least 30 wt % of the mer units derive from a meta-substituted aromatic material, such as a meta-substituted aromatic isocyanate. In these or other embodiments, as disclosed in U.S. Publ. No. 2015/0368512, which is incorporated herein by reference, these compositions may derive from aqueous dispersions of polyurethane, a polysulfide, and a curative such as magnesium oxide. In one or more embodiments, an air barrier composition can include aqueous dispersed polyurethanes. In one or more embodiments, an air barrier composition can include aqueous dispersed polyvinylidene chloride copolymers.

In one or more embodiments, the polyurethane can have reactive functional groups. As used here, a reactive functional group refers to an atom, group of atoms, functionality, or group having sufficient reactivity to form at least one covalent bond with another reactive group in a chemical reaction. For example, a polyurethane can include reactive functional groups that are reactive with themselves or with another component, such as a crosslinker. Examples of reactive functional groups include mercapto or thiol groups, hydroxyl groups, (meth)acrylate groups, carboxylic acid groups, amine groups, epoxide groups, carbamate groups, amide groups, urea groups, isocyanate groups (including blocked isocyanate groups), and combinations thereof.

In one or more embodiments, a polyurethane can be substantially free or completely free of reactive functional groups. As used here, the term substantially free means a polyurethane may contain less than 1000 parts per million (ppm), and completely free means less than 20 parts per billion (ppb), of reactive functional groups. In one or more embodiments, a polyurethane may include aqueous dispersed polyurethanes that are completely free of reactive functional groups.

In one or more embodiments, an air barrier composition may include thermoplastic polymer (e.g. polyurethane) in an amount of more than 5 wt. %, in other embodiments, more than 10 wt. %, and in other embodiments, more than 15 wt. %, based on the total solid weight of the air barrier composition. In one or more embodiments, an air barrier composition may include thermoplastic polymer in an amount of less than 75 wt. %, in other embodiments, less than 50 wt. %, in other embodiments, less than 35 wt. %, and in other embodiments, less than 20 wt. %, based on the total solid weight of the air barrier composition. In one or more embodiments, an air barrier composition may include thermoplastic polymer in an amount of from about 5 wt. % to about 75 wt. %, in other embodiments, from about 10 wt. % to about 50 wt. %, and in other embodiments, from about 10 wt. % to about 20 wt. %, based on the total solid weight of the air barrier composition. The weight % may be determined by standard gel permeation chromatography.

In one or more embodiments, an air barrier composition includes a polysulfide. The polysulfide may act as an elastomeric material in the air barrier layer. The term polysulfide refers to a polymer that contains one or more disulfide linkages (i.e. -[S-S]-) linkages, in the polymer backbone, and/or in the terminal or pendant positions on the polymer chain. A polysulfide polymer can have two or more sulfur-sulfur linkages. A polysulfide can also include a mixture of primary disulfides and higher rank polysulfides such as tri and tetra polysulfide linkages (S-S-S; S-S-S-S). Further, a polysulfide can include mercapto or thiol functional groups (an -SH group). For instance, a polysulfide can be represented by chemical formula (I) 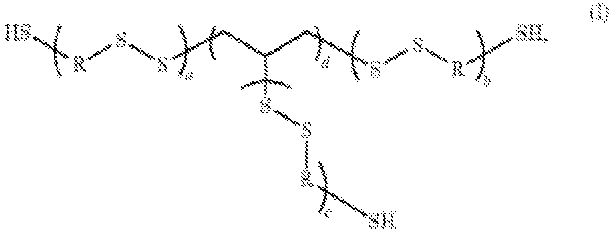 where each R can independently be -(CH₂-CH₂-O-CH₂-O-CH₂-CH₂)- and a+b+c+d can be a number up to and including 1,000. A polysulfide that can be used with the present invention can also be represented by chemical formula (II):

H(SC₂H₄OCH₂OC₂H₄S)ₙH (II),

where n can be a number up to and including 1,000. Exemplary polysulfides are those commercially available under the trade name THIOPLAST^{®}, a liquid polysulfide polymer with mercapto end groups supplied by Akzo Nobel, Greiz, Germany.

In one or more embodiments, a polysulfide can have a glass transition temperature (T_{g}) of less than 0°C, as measured by differential scanning calorimetry. In other embodiments, a polysulfide can have a glass transition temperature (T_{g}) of less than -10°C, in other embodiments, less than -20°C, and in other embodiments, less than -30°C.

In one or more embodiments, an air barrier composition may be substantially free or may be completely free of all other elastomeric materials, except for polysulfides. As used here, the term substantially free means an air barrier composition may contain less than 1000 parts per million (ppm), and completely free means less than 20 parts per billion (ppb), of all other elastomeric materials, except for polysulfides.

In other embodiments, an air barrier composition may include a polysulfide and an additional elastomeric material. Exemplary additional elastomeric materials that can be used include acrylonitriles, natural and synthetic rubbers such as aqueous butyl rubber dispersions, styrenic thermoplastic elastomers, polyamide elastomers, thermoplastic vulcanizates, flexible acrylic polymers, and combinations thereof.

In one or more embodiments, an air barrier composition may include elastomeric polymer (e.g. polysulfide) in an amount of more than 5 wt. %, in other embodiments, more than 10 wt. %, in other embodiments, more than 15 wt. %, in other embodiments, more than 25 wt. %, and in other embodiments, more than 50 wt. %, based on the total solid weight of the air barrier composition. In one or more embodiments, an air barrier composition may include elastomeric polymer in an amount of less than 80 wt. %, in other embodiments, less than 75 wt. %, and in other embodiments, less than 70 wt. %, based on the total solid weight of the air barrier composition. In one or more embodiments, an air barrier composition may include elastomeric polymer in an amount of from about 5 wt. % to about 80 wt. %, in other embodiments, from about 25 wt. % to about 75 wt. %, and in other embodiments, from about 50 wt. % to about 70 wt. %, based on the total solid weight of the air barrier composition. The weight % may be determined by standard gel permeation chromatography.

In one or more embodiments, an air barrier composition may include one or more inorganic materials. As used herein, an inorganic material refers to materials and substances that are not organic, i.e., do not include carbon-based materials. The one or more inorganic materials may include one or more platy inorganic fillers. As used herein, a platy inorganic filler refers to an inorganic material in the platy form. The term platy refers to a structure in which one dimension is substantially smaller than the two other dimensions of the structure resulting in a flat type appearance. The platy inorganic fillers are generally in the form of stacked lamellae, sheets, platelets, or plates with a relatively pronounced anisometry. The inorganic materials, such as the platy inorganic fillers, can further improve the barrier performance of the resulting air barrier layer by reducing the permeability of liquids and gases.

Suitable platy inorganic fillers can include those having a high aspect ratio. Suitable high aspect ratio platy inorganic fillers include, for example, vermiculite, mica, talc, wollastonite, chlorite, metal flakes, platy clays, and platy silicas. In one or more embodiments, a filler has a diameter of from 1 to 20 microns, in other embodiments, from 2 to 10 microns, and in other embodiments, from 2 to 5 microns. In one or more embodiments, the aspect ratio of the fillers can be at least 5:1, in other embodiments, at least 10:1, and in other embodiments, at least 20:1. For example, mica flakes may have an aspect ratio of 20:1, talc may have an aspect ratio of 10:1 to 20:1, and vermiculite may have an aspect ratio of from 200:1 to 10,000:1.

In one or more embodiments, as disclosed in U.S. Pat. No. 8,534,331, the air barrier layer includes a two-phase system where an elastomer is dispersed within a thermoplastic matrix. In certain embodiments, the thermoplastic may include nylon and the elastomer may include butyl rubber and/or a sulfur-curable diene based elastomer.

In one or more embodiments, an air barrier composition may include a rheology agent. As generally known to those skilled in the art, rheology agents are those materials that help to improve the flow properties of a composition. An exemplary rheology agent is a polypropylene glycol solution of a urea modified polyurethane

In one or more embodiments, the air barrier layer of the tires of the present invention (e.g. air barrier layer 31) may have a thickness of more than 8 mils, in other embodiments more than 10 mils, in other embodiments more than 14 mils, and in other embodiments more than 16 mils. In these or other embodiments, the air barrier layer may have a thickness of less than 28 mils, in other embodiments less than 25 mils, in other embodiments less than 20 mils, and in other embodiments less than 18 mils. In one or more embodiments, the air barrier layer may have a thickness of from about 5 mils to about 28 mils, in other embodiments from about 8 mils to about 25 mils, in other embodiments from about 10 mils to about 22 mils, and in other embodiments from about 15 mils to about 20 mils.

In one or more embodiments, the composition of the air barrier layer is not sulfur crosslinked to an adjacent tire component. For example, in one or more embodiments, the composition of the air barrier layer is not sulfur crosslinked to the innerliner. In other embodiments, the composition of the air barrier layer is not sulfur crosslinked to the carcass.

In one or more embodiments, the composition of the air barrier layer is sulfur crosslinked to an adjacent tire component. For example, in one or more embodiments, the composition of the air barrier layer is sulfur crosslinked to the innerliner. In other embodiments, the composition of the air barrier layer is sulfur crosslinked to the carcass.

### OTHER TIRE COMPONENTS

The various tire components associated with the tires of the present invention may be prepared from conventional vulcanizable compositions of matter. Accordingly, practice of one or embodiments of the present invention does not alter conventional practice for preparing the various tire components. Generally speaking, these vulcanizable compositions may include an elastomer, a filler, and a curative, as well as other ingredients including, but not limited to, antidegradants, cure activators, cure accelerators, oils, resins, plasticizers, pigments, fatty acids, zinc oxide, and peptizing agents.

### RUBBER

As suggested above, the various tire components can be prepared using a vulcanizable composition that includes a rubber. In one or more embodiments, the rubber, which may also be referred to as a vulcanizable rubber or elastomer, may include those polymers that can be vulcanized to form compositions possessing rubbery or elastomeric properties. These elastomers may include natural and synthetic rubbers. The synthetic rubbers typically derive from the polymerization of conjugated diene monomer, the copolymerization of conjugated diene monomer with other monomer such as vinyl-substituted aromatic monomer, or the copolymerization of ethylene with one or more α-olefins and optionally one or more diene monomers.

Exemplary elastomers include natural rubber, synthetic polyisoprene, polybutadiene, polyisobutylene-co-isoprene, neoprene, poly(ethylene-co-propylene), poly(styrene- co-butadiene), poly(styrene-*co*-isoprene), poly(styrene-*co*-isoprene-*co-*butadiene), poly(isoprene- co-butadiene), poly(ethylene- co-propylene- co-diene), polysulfide rubber, acrylic rubber, urethane rubber, silicone rubber, epichlorohydrin rubber, and mixtures thereof. These elastomers can have a myriad of macromolecular structures including linear, branched, and star-shaped structures. These elastomers may also include one or more functional units, which typically include heteroatoms. In particular embodiments, a vulcanizable composition includes a blend of natural rubber and synthetic diene rubber such as polybutadiene. In other embodiments, a vulcanizable composition includes olefinic rubber such ethylene-propylene-diene rubber (EPDM).

### FILLER

As suggested above, the various tire components can be prepared using a vulcanizable composition that includes a filler. The filler may include one or more conventional reinforcing or non-reinforcing fillers. For example, useful fillers include carbon black, silica, alumina, and silicates such as calcium, aluminum, and magnesium silicates.

In one or more embodiments, carbon blacks include furnace blacks, channel blacks, and lamp blacks. More specific examples of carbon blacks include super abrasion furnace (SAF) blacks, intermediate super abrasion furnace (ISAF) blacks, high abrasion furnace (HAF) blacks, fast extrusion furnace (FEF) blacks, fine furnace (FF) blacks, semi-reinforcing furnace (SRF) blacks, medium processing channel blacks, hard processing channel blacks, conducting channel blacks, and acetylene blacks. Representative carbon blacks useful in one or more embodiments may include those designated by ASTM D1765 as N326, N330, N339, N343, N347, N351, N358, N550, N650, N660, N762, N772, and N774.

In particular embodiments, the carbon blacks may have a surface area (EMSA) of at least 20 m²/g, in other embodiments at least 35 m²/g, in other embodiments at least 50 m²/g, in other embodiments at least 60 m²/g; surface area values can be determined by ASTM D-1765 using the cetyltrimethylammonium bromide (CTAB) technique. In particular embodiments, a vulcanizable composition includes carbon black filler having a surface area (EMSA) of from about 60 to about 110 m²/g. The carbon blacks may be in a pelletized form or an unpelletized flocculent form. The preferred form of carbon black may depend upon the type of mixing equipment used to mix the rubber compound.

In one or more embodiments, the filler may include silica. When silica is used as a filler, the silica may be employed in conjunction with a coupling agent. In these or other embodiments, the silica may be used in conjunction with a silica dispersing agent.

In one or more embodiments, useful silicas include, but are not limited to, precipitated amorphous silica, wet silica (hydrated silicic acid), dry silica (anhydrous silicic acid), fumed silica, calcium silicate, and the like. Other suitable fillers include aluminum silicate, magnesium silicate, and the like. In particular embodiments, the silica is a precipitated amorphous wet-processed hydrated silica. In one or more embodiments, these silicas are produced by a chemical reaction in water, from which they are precipitated as ultra-fine, spherical particles. These primary particles are believed to strongly associate into aggregates, which in turn combine less strongly into agglomerates.

Some commercially available silicas that may be used include Hi-Sil(TM) 215, Hi-Sil(TM) 233, and Hi-Sil(TM) 190 (PPG Industries, Inc.; Pittsburgh, Pa.). Other suppliers of commercially available silica include Grace Davison (Baltimore, Md.), Degussa Corp. (Parsippany, N.J.), Rhodia Silica Systems (Cranbury, N.J.), and J.M. Huber Corp. (Edison, N.J.).

In one or more embodiments, silicas may be characterized by their surface areas, which give a measure of their reinforcing character. The Brunauer, Emmet and Teller ("BET") method (described in J. Am. Chem. Soc., vol. 60, p. 309 et seq.) is a recognized method for determining the surface area. The BET surface area of silica is generally less than 450 m²/g. Useful ranges of surface area include from about 32 to about 400 m²/g, about 100 to about 250 m²/g, and about 150 to about 220 m²/g.

In one or more embodiments, the pH of silica may be from about 5 to about 7 or slightly over 7, or in other embodiments from about 5.5 to about 6.8.

In one or more embodiments, useful silica coupling agents include sulfur-containing silica coupling agents. Examples of sulfur-containing silica coupling agents include bis(trialkoxysilylorgano)polysulfides or mercapto-organoalkoxysilanes. Types of bis(trialkoxysilylorgano)polysulfides include bis(trialkoxysilylorgano)disulfide and bis(trialkoxysilylorgano)tetrasulfides. Exemplary silica dispersing aids include, but are not limited to an alkyl alkoxysilane, a fatty acid ester of a hydrogenated or non-hydrogenated C₅ or C₆ sugar, a polyoxyethylene derivative of a fatty acid ester of a hydrogenated or non-hydrogenated C₅ or C₆ sugar, and mixtures thereof, or a mineral or non-mineral additional filler.

### CURATIVE

As suggested above, the various tire components can be prepared using a vulcanizable composition that includes a curative. A multitude of rubber curing agents (also called vulcanizing agents) may be employed, including sulfur or peroxide-based curing systems. Curing agents are described in Kirk-Othmer, ENCYCLOPEDIA OF CHEMICAL TECHNOLOGY, Vol. 20, pgs. 365-468, (3rd Ed. 1982), particularly Vulcanization Agents and Auxiliary Materials, pgs. 390-402, and A.Y. Coran, Vulcanization, ENCYCLOPEDIA OF POLYMER SCIENCE AND ENGINEERING, (2nd Ed. 1989), which are incorporated herein by reference. In one or more embodiments, the curative is sulfur. Examples of suitable sulfur vulcanizing agents include "rubbermaker's" soluble sulfur; sulfur donating vulcanizing agents, such as an amine disulfide, polymeric polysulfide or sulfur olefin adducts; and insoluble polymeric sulfur. Vulcanizing agents may be used alone or in combination.

In one or more embodiments, the curative is employed in combination with a cure accelerator. In one or more embodiments, accelerators are used to control the time and/or temperature required for vulcanization and to improve properties of the vulcanizate. Examples of accelerators include thiazol vulcanization accelerators, such as 2-mercaptobenzothiazol, dibenzothiazyl disulfide, N-cyclohexyl-2-benzothiazyl-sulfenamide (CBS), and the like, and guanidine vulcanization accelerators, such as diphenylguanidine (DPG) and the like.

Other ingredients that are typically employed in rubber compounding may also be added to the rubber compositions employed for fabricating the various components of the tires of the invention. These include oils, plasticizer, waxes, scorch inhibiting agents, processing aids, zinc oxide, tackifying resins, reinforcing resins, fatty acids such as stearic acid, and peptizers. In particular embodiments, the oils that are employed include those conventionally used as extender oils, which are described above. Useful oils or extenders that may be employed include, but are not limited to, aromatic oils, paraffinic oils, naphthenic oils, vegetable oils other than castor oils, low PCA oils including MES, TDAE, and SRAE, and heavy naphthenic oils.

### METHOD OF PREPARING TIRES

The tires of the invention may be fabricated by employing conventional rubber shaping, molding, and curing techniques. In one or more embodiments, vulcanization can be effected by heating the vulcanizable composition within a mold. In one or more embodiments, the composition can be heated at an internal temperature from about 120 °C to about 180 °C.

The cured or crosslinked rubber compositions (i.e., vulcanizates) generally include three-dimensional polymeric networks that are thermoset. Other ingredients, such as processing aids and fillers, are generally dispersed throughout the vulcanized network. Tire preparation is discussed in U.S. Patent Nos. 5,866,171, 5,875,527, 5,931,211, and 5,971,046, which are incorporated herein by reference. Rubber compounding techniques and the additives employed therein are generally known as also disclosed in The Compounding and Vulcanization of Rubber, in Rubber Technology (2nd Ed. 1973), which is incorporated herein by reference.

As suggested in the Figures, the tires of the present invention can be prepared with or without an innerliner component. In one or more embodiments, where an innerliner is present, the innerliner is co-cured and therefore sulfur-crosslinked to the other rubber components such as the adjacent carcass or body plies.

### METHOD OF APPLYING SEALANT AND AIR BARRIER

As indicated above, the sealant and air barrier layers associated with the tires of this invention are applied after a cured tire is provided. In other words, the sealant and air barrier layers are applied to a tire that has undergone the vulcanization (i.e. curing) process associated with the manufacture of the tire.

Thus, once a cured tire has been provided, the sealant and air barrier layers are applied to the tire. These layers may be applied to the tire by the direct application of a liquid or otherwise flowable composition (e.g., molten extrudate) that forms a wet or green coating that then dries or cures to form the air barrier or sealant layer. In other embodiments, the sealant or air barrier layer is applied through a transfer coating; i.e., a liquid or otherwise flowable composition that forms a wet or green coating is applied to a transfer substrate, such as a release member, the wet or green coating is allowed to dry or otherwise cure into a solids composition, and then the solids composition is applied to the tire and the transfer substrate is removed.

As suggested by the drawings, in one or more embodiments, the air barrier, or where desired the sealant layer, may be applied directly to the innerliner layer of a cured tire. In other embodiments, where the cured tire is provided without a separate innerliner, the air barrier layer, and where desired the sealant layer, may applied directly to the body ply or tire carcass.

In one or more embodiments, an intermediary layer is disposed below the air barrier, or where desired the sealant layer (i.e., interior to the air barrier layer or the sealant layer). For example, an intermediary layer may include a primer layer or a release agent layer, or a combination thereof.

In one or more embodiments, a primer layer may be present where there is a desire to improve the adhesion of the air barrier layer and/or sealant layer to another component of the tire. An exemplary primer layer may include a composition including butyl rubber, such as those disclosed in U.S. Patent No. 5,985,981, which is incorporated herein by reference.

As the skilled person will appreciate, release agents, such as silicone or silicone-based compositions, maybe used during the tire manufacturing process. As a result, practice of the present invention may include applying the sealant layer or air barrier layer to a layer or film of release agent. In other embodiments, efforts may be made to remove or otherwise treat the release agents prior to application of the air barrier or sealant layers. As a result, practice of the present invention may include application of the air barrier or sealant layer to a residue of a release agent; for example, a residue resulting from the chemical treatment of a release agent layer or film.

In those embodiments where the sealant layer and/or air barrier layer derives from a liquid or otherwise flowable composition, the composition may be applied directly to the tire, or applied to a transfer member, by using a variety of techniques to form a wet or green coating layer. For example, the liquid or flowable composition may be applied by spraying, roll-coating, knife coating, extrusion, or similar techniques. In one or more embodiments, the air barrier composition has a viscosity that is low enough to allow the composition to be spray applied to the innerliner, carcass, and/or sealant layer.

Following application of the sealant layer and/or air barrier layer to the interior of the tire, further steps may be taken to expedite drying or curing of the sealant layer and/or air barrier layer. In certain embodiments, the composite (i.e. tire with sealant layer and/or air barrier layer) is allowed to air dry at standard conditions of temperature and pressure. In other embodiments, the composite is heated (e.g. to 100 °C - 150 °C).

Where the sealant or air barrier layer is applied to the cured tire via a transfer coating, the solids composition can be mated to the innerliner or carcass layer by using standard techniques that may include, for example, mating the solids composition to the carcass or innerliner and then applying pressure, such as by way of a roller.

### INDUSTRIAL APPLICABILITY

In one or more embodiments, tires of the present invention, which may also be referred to as pneumatic tires, may include passenger tires, truck/bus tires, off-road tires, agricultural tires and industrial tires. These tires and their common and distinct features are well known in the art. For example, agricultural and industrial tires include those described in, for example, U.S. Patent Publication No. 2005/0139302 A1, and U.S. Pat. Nos. 3,844,326, 4,202,391, 4,611,647, 4,791,971, 4,649,976, 5,046,541, 5,063,573, 5,188,683, 5,337,814, 5,337,816, 5,421,388, 5,464,050, 5,901,765, 6,179,027, 6,260,594, 6,263,933, 6,450,221, and 6,481,479, each of which is hereby incorporated by reference. All terrain or off-road tires include those described in, for example, U.S. Pat. Nos. 4,881,586, 5,259,429, 5,318,086, 5,375,640, 6,293,323, 6,298,890, 6,401,774, 6,799,617, and 6,929,044, each of which is hereby incorporated by reference.

Various modifications and alterations that do not depart from the scope and spirit of this invention will become apparent to those skilled in the art. This invention is not to be duly limited to the illustrative embodiments set forth herein.

## Claims

1. A method of preparing a tire (11) with self-sealing properties, the method comprising the steps of:
(i) providing a cured tire (11), the cured tire (11) including a first bead (15), a second bead (15'), a carcass layer (13) extending from the first bead (15) to the second bead (15'), and an optional innerliner layer (29) disposed interior to the carcass layer (13);
(ii) directly or indirectly applying a sealant composition to at least a portion of the carcass layer (13) or to at least a portion of the optional innerliner layer (29); and **characterised by**
(iii) directly applying an air barrier composition to at least a portion of the carcass layer (13) or to at least a portion of the optional innerliner layer (29).

2. The method of claim 1, wherein step (ii) includes directly applying a sealant composition to a portion of the carcass layer (13) or a portion of the optional innerliner layer (29) to form a sealant layer (33) and an exposed carcass layer (13) or optional innerliner layer (29) and wherein step (iii) includes applying an air barrier composition to the sealant layer (33) and to at least a portion of the exposed carcass layer (13) or exposed optional innerliner layer (29) to form an air barrier layer (31).

3. The method of claim 1, wherein step (iii) occurs prior to step (ii), the air barrier composition thereby forming an air barrier layer (31), wherein step (ii) includes applying the sealant composition to the air barrier layer (31), thereby indirectly applying the sealant composition to the carcass layer (13) or optional innerliner layer (29), to form a sealant layer (33).

4. The method of any of the preceding claims, wherein the sealant composition comprises a flowable composition that seals a puncture to the carcass layer (13).

5. The method of any of the preceding claims, wherein the sealant layer (33) includes ethylene-propylene-diene rubber.

6. The method of any one of the preceding claims , wherein the air barrier layer (31) comprises a polymeric layer having low permeability to air.

7. The method of any of any one of the preceding claims, wherein the air barrier composition includes a phase separated blend of an elastomeric component and a thermoplastic component.

## Patentansprüche

1. Verfahren zum Herstellen eines Reifens (11) mit selbstdichtenden Eigenschaften, wobei das Verfahren die Schritte umfasst:
(i) Bereitstellen eines gehärteten Reifens (11), wobei der gehärtete Reifen (11) einen ersten Wulst (15), einen zweiten Wulst (15'), eine Karkassenschicht (13), die sich von dem ersten Wulst (15) zu dem zweiten Wulst (15') erstreckt, und eine optionale Innerlinerschicht (29) einschließt, die innerhalb der Karkassenschicht (13) angeordnet ist;
(ii) direktes oder indirektes Aufbringen einer Dichtungsmittelzusammensetzung auf zumindest einen Abschnitt der Karkassenschicht (13) oder auf zumindest einen Abschnitt der optionalen Innerlinerschicht (29); und **gekennzeichnet durch**
(iii) direktes Aufbringen einer Luftbarrierezusammensetzung auf zumindest einen Abschnitt der Karkassenschicht (13) oder auf zumindest einen Abschnitt der optionalen Innerlinerschicht (29).

2. Verfahren nach Anspruch 1, wobei Schritt (ii) das direkte Aufbringen einer Dichtungsmittelzusammensetzung auf einen Abschnitt der Karkassenschicht (13) oder einen Abschnitt der optionalen Innerlinerschicht (29) einschließt, um eine Dichtungsmittelschicht (33) und eine exponierte Karkassenschicht (13) oder optionale Innerlinerschicht (29) zu bilden, und wobei Schritt (iii) das Aufbringen einer Luftbarrierezusammensetzung auf die Dichtungsmittelschicht (33) und auf zumindest einen Abschnitt der exponierten Karkassenschicht (13) oder exponierten optionalen Innerlinerschicht (29) einschließt, um eine Luftbarriereschicht (31) zu bilden.

3. Verfahren nach Anspruch 1, wobei Schritt (iii) vor Schritt (ii) erfolgt, wodurch die Luftbarrierezusammensetzung eine Luftbarriereschicht (31) bildet, wobei Schritt (ii) das Aufbringen der Dichtungsmittelzusammensetzung auf die Luftbarriereschicht (31) einschließt, wodurch die Dichtungsmittelzusammensetzung indirekt auf die Karkassenschicht (13) oder optionale Innerlinerschicht (29) aufgebracht wird, um eine Dichtungsmittelschicht (33) zu bilden.

4. Verfahren nach einem der vorstehenden Ansprüche, wobei die Dichtungsmittelzusammensetzung eine fließfähige Zusammensetzung umfasst, die einen Durchstich in der Karkassenschicht (13) versiegelt.

5. Verfahren nach einem der vorstehenden Ansprüche, wobei die Dichtungsmittelschicht (33) Ethylen-Propylen-Dien-Kautschuk einschließt.

6. Verfahren nach einem der vorstehenden Ansprüche, wobei die Luftbarriereschicht (31) eine Polymerschicht mit geringer Luftdurchlässigkeit aufweist.

7. Verfahren nach einem der vorstehenden Ansprüche, wobei die Luftbarrierezusammensetzung ein phasengetrenntes Gemisch aus einer Elastomerkomponente und einer thermoplastischen Komponente einschließt.

## Revendications

1. Procédé de préparation d'un pneu (11) avec des propriétés auto-obturantes, le procédé comprenant les étapes consistant à :
(i) fournir un pneu durci (11), le pneu durci (11) incluant un premier talon (15), un deuxième talon (15'), une couche de carcasse (13) s'étendant à partir du premier talon (15) jusqu'au deuxième talon (15'), et une couche facultative de revêtement intérieur (29) disposée intérieure à la couche de carcasse (13) ;
(ii) appliquer directement ou indirectement une composition d'obturation à au moins une partie de la couche de carcasse (13) ou à au moins une partie de la couche facultative de revêtement intérieur (29) ; et **caractérisé par**
(iii) l'application directe d'une composition de barrière à l'air à au moins une partie de la couche de carcasse (13) ou à au moins une partie de la couche facultative de revêtement intérieur (29).

2. Procédé selon la revendication 1, dans lequel l'étape (ii) inclut l'application directe d'une composition d'obturation à une partie de la couche de carcasse (13) ou à une partie de la couche facultative de revêtement intérieur (29) pour former une couche d'obturation (33) et une couche de carcasse (13) ou couche facultative de revêtement intérieur (29) exposée et dans lequel l'étape (iii) inclut l'application d'une composition de barrière à l'air à la couche d'obturation (33) et à au moins une partie de la couche de carcasse exposée (13) ou couche facultative de revêtement intérieur exposée (29) pour former une couche barrière à l'air (31).

3. Procédé selon la revendication 1, dans lequel l'étape (iii) se produit avant l'étape (ii), la composition de barrière à l'air formant de ce fait une couche barrière à l'air (31), dans lequel l'étape (ii) inclut l'application de la composition d'obturation à la couche barrière à l'air (31), ce qui applique indirectement la composition d'obturation à la couche de carcasse (13) ou à la couche facultative de revêtement intérieur (29), pour former une couche d'obturation (33).

4. Procédé selon l'une quelconque des revendications précédentes, dans lequel la composition d'obturation comprend une composition pouvant s'écouler qui obture une perforation à la couche de carcasse (13).

5. Procédé selon l'une quelconque des revendications précédentes, dans lequel la couche d'obturation (33) inclut du caoutchouc éthylène-propylène-diène.

6. Procédé selon l'une quelconque des revendications précédentes, dans lequel la couche barrière à l'air (31) comprend une couche polymère ayant une faible perméabilité à l'air.

7. Procédé selon l'un quelconque parmi l'une quelconque des revendications précédentes, dans lequel la composition de barrière à l'air inclut un mélange séparé en phases d'un composant élastomère et d'un composant thermoplastique.
